Europäisches Patentamt

European Patent Office

Office européen des brevets

(19)

(11) Numéro de publication: **0 294 248 B1**

(12) **FASCICULE DE BREVET EUROPEEN**

(45) Date de publication de fascicule du brevet: **19.01.94** (51) Int. Cl.5: **G07F 7/10, H04L 9/00**

(21) Numéro de dépôt: **88400930.9**

(22) Date de dépôt: **15.04.88**

(54) **Dispositif et procédé d'habilitation informatique ou télématique.**

(30) Priorité: **20.05.87 FR 8707093**

(43) Date de publication de la demande:
**07.12.88 Bulletin 88/49**

(45) Mention de la délivrance du brevet:
**19.01.94 Bulletin 94/03**

(84) Etats contractants désignés:
**BE CH DE ES GB GR IT LI LU NL SE**

(56) Documents cités:
**EP-A- 0 028 965        EP-A- 0 057 603
EP-A- 0 138 386        FR-A- 2 526 977
GB-A- 2 019 060        GB-A- 2 020 513
GB-A- 2 144 564**

**CRYPTO '86 PROCEEDINGS, Santa Barbara
(Août 86), Springer-Verlag, vol. 263, pages
186-194 ; A. FIAT et al. : "How to prove
yourself : Practical Solutions to Idendification and Signature Problems."**

(73) Titulaire: **DASSAULT AUTOMATISMES ET TE-
LECOMMUNICATIONS
9, rue Elsa Triolet
Z.I. Les Gatines
F-78370 Plaisir(FR)**

(72) Inventeur: **Collin, Thierry
88, rue Sylvestre
F-92400 Courbevoie(FR)**

(74) Mandataire: **Plaçais, Jean-Yves et al
Cabinet Netter,
40, rue Vignon
F-75009 Paris (FR)**

Rank Xerox (UK) Business Services
(3.10/3.09/3.3.3)

## Description

L'invention concerne l'habilitation, en matière informatique ou télématique.

Elle trouve une application particulière, non limitative, dans ce qu'on appelle la "monétique", c'est-à-dire la réalisation quasi-automatique de transactions monétaires, commerciales ou financières.

L'exemple le plus simple d'habilitation consiste en la présentation par un usager d'une information ou donnée d'habilitation, telle qu'un code confidentiel, qu'il est en principe seul à connaître. La machine en face de laquelle il se trouve, ou "terminal", est équipée pour déterminer si le code confidentiel présenté est acceptable pour l'habilitation de l'usager à une action déterminée, telle que l'accès à des informations, ou la conclusion d'une transaction. Le contrôle de la validité d'un code confidentiel s'effectue actuellement selon des critères choisis, tenant compte d'autres informations, non secrètes, servant à repérer l'usager, comme celles figurant sur un relevé d'identité bancaire.

Dès lors que l'usager doit présenter son code confidentiel, celui-ci est nécessairement introduit dans le terminal. Il existe donc un risque qu'il soit intercepté. L'intercepteur est alors en mesure de "simuler" l'usager légitime du code confidentiel.

Dans les applications actuelles, le risque d'interception est rendu très faible, par le fait que la circulation du code confidentiel dans le terminal est confinée à un espace contrôlé, et/ou qu'il fait l'objet d'un chiffrement, en cas de transmission à distance (GB-A-2020513; EP-A-138386; **Article "How to prove yourself : Practical solutions to Identification and Signature Problems", A. FIAT, A. SHAMIR, CRYPTO'86 Proceedings, Santa Barbara (août 86), Springer, Vol. 263, pp. 186-194).**

La présente invention a pour but d'améliorer encore la sécurité, en permettant d'établir une habilitation sans que le vérificateur n'ait à connaître la ou les données d'habilitation elles-mêmes (code confidentiel par exemple).

Pour alléger la suite de la présente description, on appelle "entier" un nombre entier, ou tout équivalent d'un nombre entier qui serait exprimé en format fixe, indépendamment du fait qu'il contient ou non une virgule. Un entier peut également être la transposition en code binaire, de format fixe, de toute information alphanumérique.

Les expressions "tirage au sort" et "aléatoire", qualifiant un "entier", visent la possibilité d'obtenir matériellement, dans un circuit, un nombre entier aléatoire ou pratiquement aléatoire, dans la limite du format choisi pour les entiers. Un tel tirage au sort peut, par exemple, être réalisé à l'aide d'un générateur de séquences pseudo-aléatoires.

Le dispositif d'habilitation informatique ou télématique de l'invention est du type dans lequel un poste demandeur d'habilitation détient au moins une donnée de repérage et au moins une donnée d'habilitation, en principe secrète, dont il doit justifier auprès d'un poste vérificateur, pour contrôle de validité selon des critères choisis.

L'homme de l'art comprendra que la donnée de repérage peut être une donnée numérique classique physiquement disponible dans le poste demandeur d'habilitation, ou bien résulter simplement de caractéristiques physiques de celui-ci, comme une liaison particulière dont il dispose à l'égard du poste vérificateur.

Selon une première caractéristique de l'invention, le poste demandeur comprend, dans un circuit protégé :
- des moyens de mémoire de ladite donnée d'habilitation sous la forme d'un entier d'habilitation dit "alias" ($a_j$),
- des moyens de tirage au sort, propres à définir des entiers aléatoires auxiliaires ($r_i$),
- de premiers moyens de calcul propres à effectuer une première opération, non réversible, à un seul opérande entier,
- de seconds moyens de calcul propres à effectuer une seconde opération à deux opérandes entiers, la première opération étant conservative à l'égard de cette seconde opération,

et, en dehors du circuit protégé des moyens d'interface propres à fournir sélectivement la donnée de repérage, une première quantité représentant le transformé ($R_i$) par la première opération d'un entier aléatoire auxiliaire ($r_i$) , ainsi qu'une seconde quantité ($Pi$) représentant, **en fonction de l'état d'un signal d'indice émis par le poste vérificateur,** soit le transformé ($Pi = r_i \cdot a_j$) par la seconde opération de ce même entier aléatoire ($r_i$) et de l'alias ($a_j$), soit cet entier aléatoire lui-même ($Pi = R_i$).

Ceci permet de vérifier la donnée d'habilitation sans la connaître, et de vérifier le caractère aléatoire des entiers auxiliaires.

Avantageusement, la première opération est une élévation à une puissance, en particulier la puissance 3, modulo N, N étant un nombre entier public prédéterminé possédant un large spectre de restes en tant que diviseur dans une division entière, ce que l'on appelle aussi un entier difficilement factorisable. En particulier, N est un nombre premier ou un produit de deux nombres premiers.

La seconde opération peut être une multiplication modulo N.

Selon une autre caractéristique, non impérativement nécessaire, de l'invention, le poste vérificateur comprend :

- une mémoire propre à contenir, en correspondance du repérage de chaque poste demandeur, au moins une quantité de référence ($A_j$) représentant le transformé de l'alias ($a_j$) par la première opération,
- des moyens de calcul propres à effectuer la première et la seconde opération,
- des moyens d'interface propres à recevoir d'un poste demandeur la donnée de repérage et la première quantité ($r_i$), à lui transmettre un signal d'indice (si) susceptible de prendre au moins deux états différents, ainsi qu'à recevoir ensuite, selon l'indice, la seconde quantité (Pi),
- des moyens d'interrogation susceptibles d'au moins deux états différents commandant ceux du signal d'indice, et réagissant à la réception d'une donnée de repérage et d'une première quantité en prenant au choix l'un de ces deux états, pour demander comme seconde quantité (Pi) soit, dans le premier état, le transformé ($Pi = r_i \cdot a_j$) par la seconde opération de l'entier aléatoire associé à la première quantité et de l'alias, soit dans un second état, cet entier aléatoire lui-même ($Pi = r_i$), et
- des moyens logiques de décision d'habilitation en fonction de la concordance entre, d'un côté, le transformé (WDi) par la première opération de la seconde quantité (Pi), et, de l'autre côté, soit, dans le premier état, le transformé par la seconde opération ($WVi = R_i \cdot A_j$) de la première quantité ($R_i$) et de la quantité de référence ($A_j$), soit, dans le second état, la première quantité ($WVi = R_j$).

Cependant, l'invention acquiert une puissance bien supérieure lorsque le poste demandeur possède, en mémoire secrète, un nombre prédéterminé d'alias, formant une suite rangée. Le poste vérificateur contient alors en mémoire une partie au moins de la suite ordonnée correspondante de quantités de référence. Ses moyens d'interrogation possèdent un nombre d'états différents au plus égal au nombre d'alias, augmenté de 1.

Le poste vérificateur peut ainsi demander, pour chaque première quantité reçue en correspondance d'un entier aléatoire, soit l'entier aléatoire d'origine, soit toute combinaison de celui-ci par la seconde opération avec l'un quelconque des alias.

Très avantageusement, le poste vérificateur comporte en outre des moyens propres à vérifier le caractère aléatoire des entiers auxiliaires, à partir d'une mémorisation de ceux-ci sur un intervalle de temps suffisant.

Dans un mode de réalisation de l'invention, le poste demandeur est situé à distance du poste vérificateur, et relié à celui-ci par modems. Il émet d'abord une série de premières quantités relatives à des entiers aléatoires différents (ou plus exactement résultant de tirages différents, dont il peut arriver qu'ils donnent le même résultat). Le poste vérificateur établit alors une "interrogation" paramétrée, non connue à l'avance du demandeur. Ensuite, la réponse du demandeur délivrera l'ensemble des résultats comprenant, en correspondance de chaque première quantité, soit l'entier aléatoire, soit la seconde quantité, selon le paramètre d'interrogation reçu du poste vérificateur.

Dans un autre mode de réalisation de l'invention, le poste demandeur est situé localement au même point que le poste vérificateur auquel il est directement relié. Le poste demandeur peut alors établir ses entiers aléatoires un par un. Le dialogue d'habilitation consiste en une suite de questions portant chacune sur une première quantité relative à un entier aléatoire déterminé (en cours pour le poste demandeur), et ensuite soit sur cet entier aléatoire lui-même, soit sur la seconde quantité qui correspond à ce même entier aléatoire et à un entier d'habilitation désigné.

Dans la mesure où le caractère non réversible de la première opération est suffisamment assuré, on peut aussi concevoir que le poste demandeur transmette le transformé, par cette première opération, de l'un au moins de ses alias.

Ceci est d'ailleurs une manière d'assurer le repérage du poste demandeur, pour le poste vérificateur.

L'invention offre aussi un procédé d'habilitation informatique ou télématique entre au moins un poste demandeur et au moins un poste vérificateur, caractérisé par les étapes suivantes :

a) mémoriser préalablement au moins un entier d'habilitation ou "alias" dans le poste demandeur,

b) faire tirer au sort par le poste demandeur des entiers auxiliaires aléatoires,

c) à un moment quelconque, mémoriser dans le poste vérificateur une quantité de référence représentant le transformé du ou des alias par **une** première opération, **non réversible**, **à un seul opérande entier,**

d) lors d'une demande d'habilitation qui est supposée provenir du poste demandeur :

   d1) recevoir au poste vérificateur une première quantité représentant le transformé par la première opération, d'au moins un entier aléatoire déterminé,

   d2) émettre du poste vérificateur un signal d'indice possédant un état parmi au moins deux états différents.

   d3) recevoir au poste vérificateur une quantité qui, selon l'état du signal d'indice, est supposée correspondre soit à l'entier auxiliaire aléatoire, soit au transformé de cet entier auxiliaire aléatoire et de l'alias par **une** seconde opération, **à deux opérandes entiers, la première opération étant conservative à l'égard de la seconde,**

**d4)** déterminer la concordance entre, d'un côté, le transformé (WDi) par la première opération de la seconde quantité reçue et, de l'autre côté, une quantité qui est, selon l'état du signal d'indice, soit la première quantité, telle que reçue, soit le transformé par la seconde opération de cette première quantité et de la quantité de référence,

**d5)** décider de l'habilitation en fonction de l'exactitude de la quantité reçue.

Une manière particulière de mettre en oeuvre ce procédé consiste à répéter les étapes **d1)** à **d4)**, à la volonté du poste vérificateur en faisant changer à chaque fois l'entier auxiliaire aléatoire et/ou l'alias concerné. Le poste vérificateur peut ainsi poser autant de questions qu'il le veut, jusqu'à ce qu'il ait obtenu, avec un taux de vraisemblance suffisant, la preuve de l'habilitation du poste demandeur.

Une autre mise en oeuvre du procédé consiste en ce que l'étape **d1)** s'effectue pour une série d'entiers aléatoires en nombres choisis; l'étape **d2)** porte alors sur un signal d'indice complété d'une désignation d'alias, en correspondance de chaque entier auxiliaire aléatoire; l'étape **d3)** porte le cas échéant sur l'alias désigné pour chaque entier auxiliaire.

Bien entendu, on pourra concevoir aisément d'autres variantes du dispositif et du procédé qui viennent d'être exposés.

D'autres caractéristiques et avantages de l'invention apparaîtront à l'examen de la description détaillée ci-après, et des dessins annexés, sur lesquels :

- la figure 1 est un schéma de principe d'un dispositif permettant la mise en oeuvre de l'invention; et
- la figure 2 est un organigramme d'un exemple de mise en oeuvre du procédé selon l'invention, appliqué à une authentification unidirectionnelle.

Les dessins annexés comportent, pour l'essentiel, des éléments de caractère certain. En conséquence, ils pourront non seulement servir à mieux faire comprendre la description détaillée, mais aussi contribuer à la définition de l'invention, le cas échéant.

Par ailleurs, il est clair que la description détaillée ci-après concerne un exemple d'application de l'invention, donné à titre non limitatif.

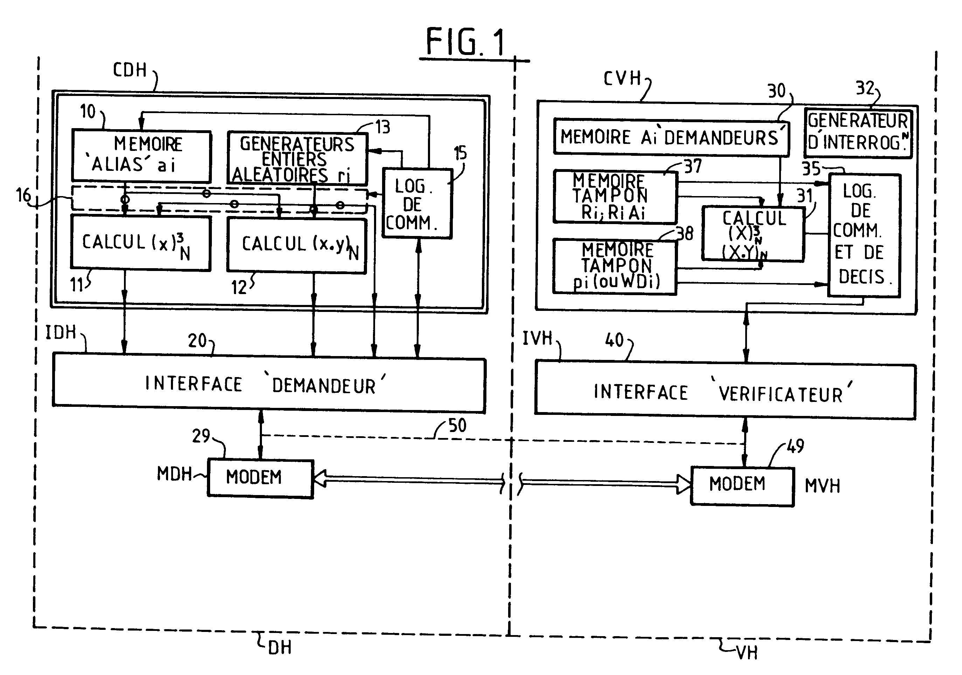

Sur la figure 1, le poste demandeur d'habilitation DH comporte un circuit secret CDH, une interface IDH, également désignée par la référence 20, et un modem MDH également désigné par la référence 29.

Le caractère secret du circuit CDH est matérialisé sur le dessin par le fait que celui-ci est entouré d'un cadre en trait doublé.

Le poste vérificateur VH comporte un circuit CVH, qui n'a pas impérativement besoin d'être secret, mais peut avantageusement l'être. Il s'y ajoute une interface IVH également désignée par la référence 40, et un modem MVH désigné aussi par la référence 49.

L'homme de l'art comprendra que la liaison par modem s'entend si les postes DH et VH sont distants. Lorsqu'ils sont rapprochés, on peut prévoir une liaison directe 50 entre les deux interfaces 20 et 40.

Le circuit secret CDH comporte une mémoire 10 servant à contenir les alias $a_i$ qui sont les entiers d'habilitation.

Ces entiers sont exprimés dans un format fixe de longueur L.

Le circuit CDH comporte également un générateur 13 d'entiers aléatoires $r_i$, qui sont en principe de même longueur L que les alias.

Le circuit CDH comporte encore un premier organe de calcul 11 capable d'effectuer une élévation au cube modulo N d'un entier de longueur L.

L'élévation au cube de nombres entiers est une opération connue de l'homme de l'art. Etant réalisée modulo N, elle est simplifiée, puisqu'après chaque multiplication il est possible d'effectuer une division par N du résultat et de poursuivre les calculs en utilisant le reste. La taille des registres de calcul s'en trouve réduite d'autant.

Comme précédemment indiqué, N est un nombre premier ou un produit de deux nombres premiers. On pourra par exemple prendre N égal au nombre premier immédiatement supérieur à une puissance entière de 2, comme 65537. Cela peut aussi simplifier les calculs.

Le circuit 11 réalise la première opération à un opérande. Par exemple il fournit le reste de la division de la puissance cubique de son entrée par le nombre N. Dès lors que le nombre N possède un large spectre de restes, couvrant une large partie des valeurs de restes possibles de 0 à N, et de préférence toutes ou presque toutes ces valeurs, il apparaît que l'opération de calcul effectuée par l'organe 11 est non réversible, et qu'il est d'autant plus difficile de trouver le nombre entier d'entrée appliqué à l'organe 11.

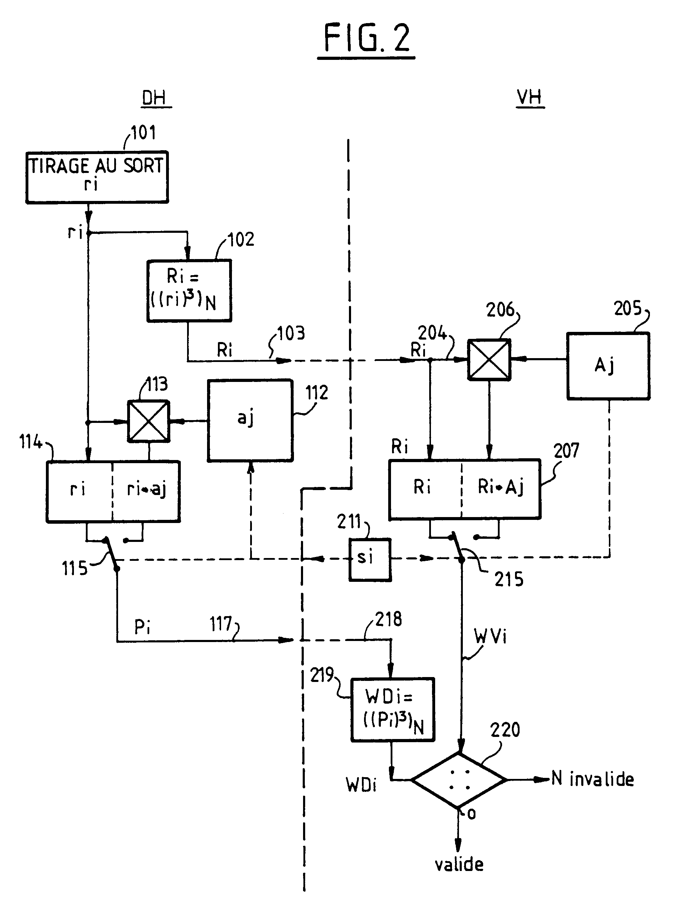

Un second organe de calcul 12 réalise une opération à deux opérandes, comme par exemple une multiplication modulo N. Cette opération est dénotée par l'opérateur "." sur la figure 1, ou bien d'un carré marqué d'une croix de Saint André sur la figure 2.

Il est nécessaire que la première opération soit conservative à l'égard de la seconde. Cela signifie la chose suivante : soient x et y deux entiers.Le cube modulo N du produit de ces deux entiers par la seconde opération (une multiplication modulo N) doit être égal au produit des cubes modulo N de x et de y.

Il existe d'autres couples d'opérations entières susceptibles de satisfaire cette condition.

Le circuit secret CDH contient encore une logique de commande 15 qui contrôle la mémoire 10, le générateur d'entiers aléatoires 13, les deux organes de calcul 11 et 12, ainsi que les sorties d'informations du circuit secret CDH, lesquelles ne peuvent porter que sur des sorties des organes de calcul 11 et 12 ou sur la sortie du générateur d'entiers aléatoires, à l'exclusion bien entendu de la sortie de la mémoire d'alias 10. Le cas échéant, la logique de commande 15 peut également fournir à l'interface 20 les données repérant ou identifiant le poste demandeur DH. (le mot "identifiant" est évité dans la présente description, car les données d'habilitation peuvent très bien comprendre les données d'identification; on parle simplement de "repérage" lorsqu'il s'agit de désigner le poste demandeur concerné.)

L'échange de données qui est ainsi possible à travers l'interface demandeur 20 transite directement ou par modem vers le poste vérificateur VH.

Le circuit CVH de celui-ci comprend une mémoire 30 susceptible de contenir les transformées $A_i$ par la première opération des alias $a_i$ de chacun des postes demandeurs qui peuvent solliciter une habilitation. Incidemment, on observera que lorsqu'un entier de base est désigné par une minuscule, son transformé par la première opération est désigné en principe par la majuscule correspondante.

Le circuit CVH comprend également un organe de calcul 31 capable d'effectuer les première et seconde opérations. Il comprend aussi une logique de commande et de décision 35, dans laquelle on pourra distinguer des moyens d'interrogation proprement dits et des moyens de décision, en plus des fonctions de commande générales des mémoires et de l'organe de calcul ainsi que des entrées/sorties d'informations du circuit CVH.

Ce circuit CVH comporte encore une mémoire tampon 37 capable de recevoir les premières quantités $R_i$ qui vont venir d'un poste demandeur. Ces premières quantités $R_i$ sont des transformées, supposées établies dans le poste demandeur, d'un nombre entier aléatoire de base $r_i$.

Mais il est également à craindre qu'un intrus ait intercepté la valeur $R_i$ lors de sa circulation entre les deux postes. Ceci ne lui donne pas, pour autant, accès à l'entier aléatoire de base $r_i$.

Pour engendrer l'interrogation, il est avantageux de prévoir un organe spécialisé 32. Il procède par tirage aléatoire, ou encore selon un algorithme spécifique inconnu des demandeurs, et imprévisible de ceux-ci.

Une autre mémoire tampon 38 va servir à stocker d'autres informations qui peuvent être soit une seconde quantité $p_i$, soit le transformé de celle-ci par la première opération, noté exceptionnellement $WD_i$ (plutôt que $P_i$).

Dans le cas d'une identification unidirectionnelle, le circuit CVH n'est pas nécessairement un circuit secret comme le circuit CDH. En pratique, pour certains modes de réalisation de l'invention au moins, on aura cependant intérêt à ce que le circuit CVH soit un circuit secret, compte tenu de son aptitude à accumuler un nombre assez important d'informations résultant de la mise en oeuvre de l'invention. La connaissance de cet ensemble d'informations pourrait en effet diminuer la sécurité de l'invention.

On reviendra brièvement sur les circuits CDH. En regard de la logique de commande, il apparaît un cadre 16 en trait tireté, dans lequel les connexions issues de la mémoire 10 et du générateur 13 vers les organes de calcul ou vers l'extérieur sont chacune marquées d'un cercle. Ces cercles schématisent un interrupteur placé sous le controle de la logique de commande 15. On notera également une liaison en trait tireté entre la mémoire 10 et l'organe de calcul 11. Cette liaison peut servir à transmettre des valeurs $A_i$, pour les applications où celles-ci ne seraient pas toutes inscrites a priori dans la mémoire 30 du ou des postes vérificateurs.

La figure 2 permettra maintenant de mieux comprendre l'invention, sur un exemple élémentaire de mise en oeuvre du procédé. L'indice i utilisé sur la figure 2 montre que l'interrogation ou question élémentaire dont il s'agit a vocation à être répétée.

L'étape 101 consiste en un tirage au sort, dans le circuit 13, d'un entier auxiliaire aléatoire $r_i$.

L'étape 102 consiste en un actionnement de l'organe de calcul 11 par la logique de commande 15, ce qui fournit le transformé $R_i$ de l'entier aléatoire de base. L'étape 103 consiste en la transmission, sous le contrôle de la logique de commande 15, et à travers l'interface 20, de la grandeur $R_i$ vers le poste vérificateur VH. Il est supposé que, vu du côté de ce poste vérificateur, le poste demandeur DH est "repéré". Ceci peut se faire de toute manière adéquate, notamment de celles évoquées plus haut.

A l'étape 204, le poste VH reçoit par son interface 40 la grandeur $R_i$. Sous le contrôle de la logique 35, cette grandeur est appliquée à l'organe de calcul 31, pour effectuer la seconde opération de calcul, comme matérialisé en l'étape 206, en correspondance de l'une des quantités de référence $A_i$ disponibles dans la mémoire 205.

En même temps, la logique de commande 35 actionne la mémoire 37, comme indiqué en l'étape 207, pour qu'elle stocke la grandeur $R_i$ et, en principe, la grandeur $R_i \cdot A_i$.

L'homme de l'art comprendra cependant que, pour certains modes de réalisation de l'invention au moins, la réalisation des étapes 205, 206 et de la mise en mémoire $R_i.A_i$ peut être différée jusqu'à ce qu'on connaisse la valeur de $s_i$.

Ce qui vient d'être décrit concerne la première partie d'une "question"; cette première partie est consécutive à l'émis-sion d'au moins un entier aléatoire par le poste demandeur, d'où il résulte certaines actions dans le poste vérificateur VH.

Après cela, l'étape 211 consiste en la définition d'un signal d'indice $S_i$.

Dans une version tout à fait élémentaire du procédé selon l'invention, ce signal d'indice ne prend que deux valeurs, par exemple 0 et 1. Le signal en question est transmis au poste demandeur DH. Si sa valeur est 0, des aiguillages, schématisés ici par des contacteurs, sont placés tous les deux dans leur position de gauche. $S_i$ la valeur de $S_i$ est 1, ils sont au contraire placés dans leur position de droite.

Cependant, il est plus avantageux que le signal d'indice $s_i$ puisse prendre d'autres valeurs. Celles-ci servent alors à désigner l'un des alias. Cette désignation vient donc d'un côté, dans le poste vérificateur VH, définir la sélection dans la mémoire 205 de celle des quantités de référence $A_i$ qui va être appliquée à l'opérateur 206. Dans le poste demandeur DH, cette désignation sert à définir celui des alias $a_i$ contenus dans la mémoire secrète 10 qui va, à l'étape 112, être appliqué pour la réalisation de l'étape 113 qui est une mise en oeuvre du second organe de calcul 12 par la logique de commande 15.

La logique de commande 15 peut alors mémoriser à l'étape 114 d'une part l'entier aléatoire auxiliaire $r_1$ (supposé toujours disponible en sortie du générateur 13), et d'autre part le produit $r_i.a_i$ issu de l'étape 113.

On observe maintenant que, quelle que soit la position des commutateurs 115 et 215, et la valeur d'indice définie par le signal $s_i$, on dispose en sortie des commutateurs 115 et 215, respectivement, d'une quantité de base notée $p_i$,du coté du poste demandeur DH, et, du côté du poste vérificateur VH, d'une quantité $WV_i$ qui est supposée être le transformé de cette quantité de base par la première opération.

La quantité de base $p_i$ est soit l'entier aléatoire $r_i$ luimême, soit une seconde quantité représentant le produit de l'entier aléatoire $r_i$ et de l'alias $a_i$ par la seconde opération.

L'étape 117 consiste en la transmission de la quantité $p_i$ du poste demandeur DH vers le poste vérificateur VH où elle est reçue comme matérialisé à l'étape 218 à travers l'interface 40.

La logique de commande 35 applique ce signal $p_i$ à l'organe de calcul 31, où il subit la première opération comme indiqué en 219, ce qui fournit le transformé $WD_i$ de $p_i$ par cette première opération.

La logique de commande 35 intervient alors comme indiqué à l'étape 220 pour prendre une décision ou une décision partielle, en fonction de la comparaison de $WD_i$ reçu et de $WV_i$ calculé localement.

Le mécanisme de prise de décision lui-même peut faire l'objet de très nombreuses variantes, dès lors qu'on disposera d'un nombre suffisamment important de comparaisons élémentaires effectuées à l'étape 220.

Cela étant, on peut considérer schématiquement que toute comparaison invalide se traduira par la non habilitation du poste demandeur. Mais, pour un très grand nombre de comparaisons, on peut admettre que quelques-unes d'entre elles soient erronées, sous certaines conditions.

Comme déjà indiqué, ce qui vient d'être décrit en référence à la figure 2 est une mise en oeuvre "élémentaire" du procédé selon l'invention. Cette mise en oeuvre élémentaire peut être résumée comme suit :
En réponse à chaque tirage au sort d'un entier aléatoire $r_i$, et à la transmission de son transformé $R_i$, le poste vérificateur peut demander soit ce nombre aléatoire $r_i$ luimême, soit le produit par la seconde opération de l'entier aléatoire et de l'un quelconque, désigné par le signal $s_i$,des alias $a_i$.

En posant à volonté le nombre de questions de ce type qui lui convient, le poste vérificateur peut disposer d'autant de résultats de comparaison 220 qu'il veut.

A priori, on admettra que toute comparaison invalide suffit à disqualifier un poste demandeur. Le nombre de questions posées pourra alors être fixé en fonction d'un taux de sécurité à respecter qui peut être soit prédéterminé, soit ajusté à volonté cas par cas par le poste vérificateur.

Dans ce qui vient d'être décrit, différentes questions sont posées séquentiellement. Il est bien entendu possible, et plus intéressant dans le cas d'une transmission par modem, de les poser en parallèle.

Dans ces conditions, ce n'est pas un tirage au sort mais une série de tirages au sort que va transmettre initialement le poste demandeur DH au poste vérificateur VH.

Le nombre de tirages au sort n'est pas limité au nombre d'alias existants, car :
- d'une part, certains nombres tirés au sort ne serviront pas à la confirmation d'un alias, mais seront simplement vérifiés eux-mêmes;

- d'autre part il peut être souhaitable de vérifier un ou plusieurs alias en considérant leurs produits par plusieurs entiers aléatoires.

Un signal d'indice $s_i$ est alors transmis pour chaque entier aléatoire tiré au sort.

En conséquence, on disposera d'autant de secondes quantités $P_i$ que de premières quantités $R_i$.

Finalement, on dispose d'un nombre de comparaisons 220 égal au nombre d'entiers aléatoires $r_i$ initialement défini.

Dans ce dernier mode de réalisation, on peut se contenter de poser une seule question multiple. Mais, si une sécurité supérieure est désirée, le poste vérificateur VH peut interroger le poste demandeur DH pour une nouvelle série de tirages au sort, et ainsi de suite.

Dans un exemple de réalisation de l'invention, le nombre premier N est égal à 65537.

Chaque entité (poste demandeur) se donne K alias différents, avec K égal à 7 ou 15 par exemple, ces alias étant numérotés de 1 à K.

L'étape 101 consiste à tirer m nombres au hasard $r_i$, dont il envoie les transformés $R_i$ par la première opération (premières quantités). Après avoir effectué les opérations déjà décrites, le poste vérificateur va renvoyer m valeurs du signal d'indice $s_i$, pouvant aller de 0 à K, avec la contrainte que ces valeurs ne sont pas toutes nulles, de façon qu'au moins un alias soit vérifié. Ceci détermine la spécificité de l'interrogation faite par le poste vérificateur, et garantit ainsi la personnalisation de la réponse.

Le poste demandeur devra renvoyer les N produits de la forme :

$p_i = r_i.a_j$ avec j = $s_i$ et, par définition, $a_0 = 1$. En effet, à la valeur 0 du signal d'indice $s_i$, le poste demandeur répond en envoyant purement et simplement son nombre entier aléatoire $r_i$.

La vérification peut s'effectuer de la même manière, c'està-dire en faisant systématiquement des produits de la forme:

$WV_i = R_i.A_j$, avec par définition $A_0 = 1$.

Cette remarque ouvre la voie à une réalisation particulièrement simple, permettant d'éviter les commutations illustrées en 115 et 215, puisque les cas où l'on considère seulement le nombre aléatoire peuvent très bien être considérés comme un produit de celui-ci par l'unité (plus exactement par l'élément neutre de la seconde opération).

Les valeurs K et m sont déterminées de façon que la probabilité $2^{-(k+1)m}$ pour que la même séquence soit redemandée à un poste demandeur identique soit très faible.

En pratique, on pourrait imaginer les couples suivants:

K = 1, m = 10
K = 18, m = 1
K = 7, m = 3

En prenant d'ores et déjà des valeurs K = 7 et m = 3 ou K = 3 et m = 6, la probabilité sus-mentionnée est déjà au moins égale à $2^{-24}$.

Dans les applications courantes, on peut se contenter de K = 3 et m = 4, ce qui donne encore une probabilité inférieure à deux cents millièmes, où K = 1 et m = 8, ce qui donne le même résultat.

On donnera maintenant un exemple particulier d'application de l'invention.

## EXEMPLE

Données de base :
N = $2^{16}$ + 1 = 65537, nombre premier
K = 3, m = 4
Identités secrétes :
$a_1 = 11111$
$a_2 = 22222$
$a_3 = 33333$
Quantités de référence $A_j$, obtenues par élévation au cube
modulo N.
$A_1 = 16119$
$A_2 = 63415$
$A_3 = 41991$
Tirage au sort des nombres aléatoires (étape 101).
$r_1 = 12345$
$r_2 = 34567$
$r_3 = 56789$
$r_4 = 78901$
Calcul et transmission des premières quantités $R_i$ - (étapes 102, 103).
$R_1 = 23289$
$R_2 = 64918$
$R_3 = 12729$
$R_4 = 12602$
Détermination des quatre valeurs du signal d'indice $s_i$,choisi par tirage au sort entre 0 et 3 (étape 211).
$s_1 = 2$
$s_2 = 0$
$s_3 = 2$
$s_4 = 3$
Détermination des produits $p_i$, par multiplication modulo N (étapes 113, 114, 115).
$p_1 = 58245$
$p_2 = r_2 = 34567$
$p_3 = 50223$
$p_4 = 07223$
Le simple examen des valeurs qui viennent d'être données pour cet exemple montre qu'aucune des informations transmises n'a de rapport avec les alias secrets $a_1$ à $a_3$.

Calcul des produits $WV_i$ (étapes 206, 207 et 215).
$WV_1 = 61177$
$WV_2 = 64918$
$WV_3 = 55843$
$WV_4 = 24844$

Transformation par la première opération des valeurs $p_i$ (étape 219).

$WD_1 = 61177$
$WD_2 = 64918$
$WD_3 = 55843$
$WD_4 = 24844$

Vérification d'identité (étape 220) par la correspondance entre les $WV_i$ et les $WD_i$.

Comme déjà indiqué, l'invention est susceptible de nombreuses variantes incluses dans le cadre des revendications ci-après.

Pour certaines applications, on peut par exemple envisager que l'étape 219 de la figure 2 soit mise en oeuvre dans le poste demandeur DH. Ceci supprime la nécessité d'effectuer la première opération dans les postes vérificateurs. En contrepartie, il devient moins facile de vérifier le caractère aléatoire des tirages au sort effectués en 101 dans le poste demandeur.

Par ailleurs, il est bien entendu possible d'intercaler, dans la mise en oeuvre du procédé selon l'invention, des interrogations portant sur le transformé $A_j$ des alias $a_j$ par la première opération.

Enfin, les exemples décrits concernent une authentification unidirectionnelle. L'extension à une authentification mutuelle s'en déduit immédiatement, en prévoyant naturellement des circuits secrets de chaque côté.

A côté de cela, la longeur L du format des nombres entiers peut aller, suivant les applications, de 4 octets (utilisation pour habilitation individuelle, par code confidentiel) à des valeurs beaucoup plus élevées (transactions électroniques inter-bancaires).

De même, pour augmenter la sécurité, la première opération peut être une élévation à une puissance entière plus grande que trois.

Sur un autre plan, il est clair qu'on pourra chercher à restreindre autant que possible la connaissance des transformés $A_j$ des alias $a_i$. Ainsi, chaque poste vérificateur peut ne disposer que d'une partie de ces transformés.

**Revendications**

1. Dispositif d'habilitation informatique ou télématique,
   dans lequel un poste demandeur d'habilitation (DH) détient au moins une donnée de repérage, et au moins une donnée d'habilitation, en principe secrète, dont il doit justifier auprès d'un poste vérificateur (VH), pour contrôle de validité selon des critères choisis,
   caractérisé en ce que le poste demandeur (DH) comprend, dans un circuit protégé (CDH) :
   - des moyens de mémoire (10) de ladite donnée d'habilitation sous la forme d'un entier d'habilitation dit "alias" ($a_j$),
   - des moyens de tirage au sort (13), propres à définir des entiers aléatoires auxiliaires ($r_i$),
   - des premiers moyens de calcul (11) propres à effectuer une première opération, non réversible, à un seul opérande entier,
   - de seconds moyens de calcul (12) propres à effectuer une seconde opération à deux opérandes entiers, la première opération étant conservative à l'égard de cette seconde opération,
   et, en dehors du circuit protégé, des moyens d'interface (IDH) propres à fournir sélectivement la donnée de repérage, une première quantité représentant le transformé ($R_i$) par la première opération d'un entier aléatoire auxiliaire ($R_i$), ainsi qu'une seconde quantité ($P_i$) représentant en fonction de l'état d'un signal d'indice émis par le poste vérificateur soit le transformé ($P_i = r_i \cdot a_j$) par la seconde opération de ce même entier aléatoire ($r_i$) et de l'alias ($a_j$), soit cet entier aléatoire lui-même ($P_i = r_i$), ce qui permet de vérifier la donnée d'habilitation sans la connaître, et de vérifier le caractère aléatoire des entiers auxiliaires.

2. Dispositif selon la revendication 1, caractérisé en ce que la première opération est une élévation à une puissance, modulo N, N étant un nombre entier public prédéterminé possédant un large spectre de restes en tant que diviseur dans une division entière, en particulier un nombre premier ou un produit de deux nombres premiers, et en ce que la seconde opération est une multiplication modulo N.

3. Dispositif selon la revendication 2, caractérisé en ce que la première opération est une élévation à la puissance trois, modulo N.

4. Dispositif selon l'une des revendications 1 et 2, caractérisé en ce que le poste vérificateur (VH) comprend :
   - une mémoire (30) propre à contenir, en correspondance du repérage de chaque poste demandeur, au moins une quantité de référence ($A_j$) représentant le transformé de l'alias ($a_j$) par la première opération,
   - des moyens de calcul (31) propres à effectuer la première et la seconde opération,
   - des moyens d'interface (40) propres à recevoir d'un poste demandeur la donnée de repérage et la première quantité ($R_i$), à lui transmettre un signal d'indice (si) susceptible de prendre au moins deux états différents, ainsi qu'à recevoir ensuite la seconde quantité (Pi),

- des moyens d'interrogation (32), susceptibles d'au moins deux états différents commandant ceux du signal d'indice, et réagissant à la réception d'une donnée de repérage et d'une première quantité en prenant au choix l'un de ces deux états, pour demander comme seconde quantité (Pi) soit, dans le premier état, le transformé ($Pi = r_i \cdot a_j$) par la seconde opération de l'entier aléatoire associé à la première quantité et de l'alias, soit, dans un second état, cet entier aléatoire lui-même ($Pi = r_i$), et

- des moyens logiques (35) de décision d'habilitation en fonction de la concordance entre, d'un côté, le transformé (WDi) par la première opération de la seconde quantité (Pi), et, de l'autre côté, soit, dans le premier état, le transformé ($WVi = R_i \cdot A_j$) de la première quantité ($R_i$) et de la quantité de référence ($A_j$) par la seconde opération, soit, dans le second état, la première quantité ($WVi = R_i$).

5. Dispositif selon la revendication 4, caractérisé en ce que le poste demandeur (DH) possède, en mémoire secrète (10), un nombre prédéterminé d'alias ($a_j$), formant une suite rangée, en ce que le poste vérificateur (VH) contient en mémoire (30) une partie au moins ($A_j$) de la suite ordonnée correspondante de quantités de référence et en ce que ses moyens d'interrogation (32) possèdent un nombre d'états différents au plus égal au nombre d'alias, augmenté de 1.

6. Dispositif selon l'une des revendications 4 et 5, caractérisé en ce que le poste vérificateur (VH) comporte également des moyens (37, 38, 35) propres à vérifier le caractère aléatoire des entiers auxiliaires.

7. Dispositif selon l'une des revendications 1 à 6, caractérisé en ce que le poste demandeur (DH), distant du poste vérificateur (VH), est relié à celui-ci par modems (29, 49), en ce qu'il émet d'abord une série de premières quantités relatives à des entiers aléatoires différents, et ensuite, en correspondance de chaque première quantité, soit l'entier aléatoire, soit le transformé par la seconde opération de ce même entier aléatoire et de l'alias.

8. Dispositif selon l'une des revendications 1 à 6, caractérisé en ce que le poste demandeur (DH), local, est directement relié au poste vérificateur (VH), et en ce qu'il répond à une suite de questions portant chacune d'abord sur une première quantité relative à un entier aléatoire déterminé, et ensuite soit sur cet entier aléatoire, soit sur le transformé par la seconde opération de l'entier aléatoire et d'un entier d'habilitation désigné.

9. Dispositif selon l'une des revendications 1 à 8, caractérisé en ce que le poste demandeur (DH) est également capable de transmettre le transformé, par la première opération, de l'un au moins de ses alias.

10. Procédé d'habilitation informatique ou télématique entre au moins un poste demandeur et au moins un poste vérificateur, caractérisé par les étapes suivantes :

a) mémoriser préalablement (10) au moins un entier d'habilitation ou "alias" ($a_j$) dans le poste demandeur,

b) **faire tirer au sort par** le poste demandeur des entiers auxiliaires aléatoires ($r_i$),

c) à un moment quelconque, mémoriser dans le poste vérificateur (30) une quantité de référence représentant le transformé ($A_j$) du ou des alias par **une** première opération, **non réversible, à un seul opérande entier,**

d) lors d'une demande d'habilitation qui est supposée provenir du poste demandeur :

d1) recevoir au poste vérificateur (VH) une première quantité représentant le transformé ($R_i$) par la première opération, d'au moins un entier aléatoire déterminé,

d2) émettre du poste vérificateur (VH) un signal d'indice (si) possédant un état parmi au moins deux états différents,

d3) recevoir au poste vérificateur (VH) une quantité (Pi) qui, selon l'état du signal d'indice, est supposée correspondre soit à l'entier auxiliaire aléatoire ($Pi = r_i$), soit au transformé ($Pi = r_i \cdot a_j$) de cet entier auxiliaire aléatoire et de l'alias par **une** seconde opération, **à deux opérandes entiers, la première opération étant conservative à l'égard de la seconde,**

d4) déterminer la concordance entre, d'un côté, le transformé (WDi) par la première opération de la seconde quantité reçue (Pi) et, de l'autre côté, une quantité (WVi) qui est, selon l'état du signal d'indice, soit la première quantité ($R_i$), telle que reçue, soit le transformé ($R_i \cdot A_j$) par la seconde opération de cette première quantité ($R_i$) et de la quantité

de référence ($A_j$),

    **d5)** décider de l'habilitation en fonction de l'exactitude de la quantité reçue.

**11.** Procédé selon la revendication 10, caractérisé en ce que les étapes **$d_1$)** **à $d_4$)** sont répétées à la volonté du poste vérificateur (VH), en faisant changer à chaque fois l'entier auxiliaire aléatoire et/ou l'alias concerné.

**12.** Procédé selon les revendication 9 à 11, caractérisé en ce que l'étape **d1)** s'effectue pour une série d'entiers aléatoires en nombre choisi,

l'étape **d2)** porte sur un signal d'indice complété d'une désignation d'alias, en correspondance de chaque entier auxiliaire aléatoire,

les étapes **d3) et d4)** portent, le cas échéant, sur l'alias désigné pour chaque entier auxiliaire.

## Claims

**1.** Apparatus for authorizing access to data or data communication lines,

in which an authorization caller station (DH) holds at least one location code and at least one, in principle secret, authorization code, which are to be proven at a verifying station (VH) for checking the validity according to selected criteria,

characterized in that the caller station (DH) comprises, in a protected circuit (CDH):

- memory means (10) for said authorization code in the form of an authorization integer known as an "alias" ($a_j$),
- random selection means (13) adapted for defining auxiliary random integers ($r_i$),
- first calculation means (11) adapted for carrying out a first, non-reversible, operation on a single whole operand,
- second calculation means (12) adapted for carrying out a second operation on two whole operands, the first operation being conservative with respect to this second operation,

and, outside the protected circuit, interface means (IDH), adapted for supplying selectively the location code, a first quantity representing the transform ($R_i$) by the first operation of an auxiliary random integer ($R_i$), and also a second quantity ($P_i$) representing, as a function of the state of a code signal emitted by the verifying station, either the transform ($Pi = r_i.a_j$) by the second operation of this same random integer ($r_i$) and of the alias ($a_j$), or this random integer itself ($Pi = r_i$), which enables the authorization code to be verified without its being known, and the random character of the auxiliary integers to be verified.

**2.** Apparatus according to Claim 1, characterized in that the first operation is a raising to a power, modulo N, where N is a predetermined public integer possessing a wide spectrum of remainders as divisor in a complete division, in particular a prime number or a product of two prime numbers, and in that the second operation is a multiplication modulo N.

**3.** Apparatus according to Claim 2, characterized in that the first operation is a raising to the power of three, modulo N.

**4.** Apparatus according to one of Claims 1 and 2, characterized in that the verifying station (VH) comprises:

- a memory (30) adapted for containing, in correspondence with the location of each caller station, at least one reference quantity ($A_j$) representing the transform of the alias ($a_j$) by the first operation,
- calculation means (31) adapted for carrying out the first and the second operations,
- interface means (40) adapted for receiving, from a caller station, the location code and the first quantity ($R_i$), of transmitting to it a code signal (si) capable of adopting at least two different states, and of then receiving the second quantity ($P_i$),
- interrogation means (32), capable of at least two different states commanding those of the code signal and reacting to the reception of one location code and of one first quantity by choosing the one of these two states, for asking for, as second quantity ($P_i$), either, in the first state, the transform ($Pi = r_i.a_j$) by the second operation of the random integer associated with the first quantity and of the alias, or, in a second state, this random integer itself ($Pi = r_i$), and
- authorization decision logic means (35) for authorizing a decision as a function of the coincidence between, on the one hand, the transform ($WDi$) by the first operation of the second quantity ($P_i$) and, on the other hand, either in the first state the transform ($WVi = R_i.A_j$) of the first quantity ($R_i$) and of the reference quantity ($A_j$) by the second operation, or, in the second state, the first quantity ($WVi = R_i$).

5. Apparatus according to Claim 4, characterized in that the caller station (DH) possesses, in the secret memory (10), a predetermined number of aliases ($a_j$) forming a stored series, in that the verifying station (VH) contains in its memory (30) a part at least ($A_j$) of the corresponding classified series of reference quantities and in that its interrogation means (32) possess a number of different states equal at most to the number of aliases plus 1.

6. Apparatus according to one of Claims 4 and 5, characterized in that the verifying station (VH) comprises also means (37, 38, 35) adapted for verifying the random character of the auxiliary integers.

7. Apparatus according to one of Claims 1 to 6, characterized in that the caller station (DH), remote from the verifying station (VH), is connected to it by modems (29, 49), in that it first issues a series of first quantities relative to different random integers, and then, in correspondence with each first quantity, either the random integer or the transform by the second operation of this same random integer and of the alias.

8. Apparatus according to one of Claims 1 to 6, characterized in that the caller station (DH), being local, is directly connected to the verifying station (VH), and in that it answers a series of questions each bearing firstly on a first quantity relative to a specific random integer, and then, either on this random integer, or on the transform by the second operation of the random integer and of a designated authorization integer.

9. Apparatus according to one of Claims 1 to 8, characterized in that the caller station (DH) is capable also of transmitting the transform, by the first operation, of at least one of its aliases.

10. A method for authorizing access to data or data communication lines between at least one caller station and at least one verifying station, characterized by the following steps:
    a) previously memorizing (10) at least one authorization integer or "alias" ($a_j$) in the caller station,
    b) randomly selecting, by the caller station, auxiliary random integers ($r_i$),
    c) at any instant, memorizing in the verifying station (30), a reference quantity representing the transform ($A_j$) of the alias or aliases by a first, non-reversible operation, on a single whole operand,

    d) during a request for authorization which is assumed to originate from the caller station:
    d1) receiving at the verifying station (VH) a first quantity representing the transform ($R_i$) by the first operation of at least one determined random integer,
    d2) emitting, from the verifying station (VH), a code signal (si) possessing a state from among at least two different states,
    d3) receiving at the verifying station (VH) a quantity (Pi) which, depending upon the state of the code signal, is assumed to correspond either to the random auxiliary integer ($Pi = r_i$) or to the transform ($Pi = r_i.a_j$) of this auxiliary random integer and of the alias by a second operation, on two whole operands, the first operation being conservative with respect to the second,
    d4) determining the coincidence between, on the one hand, the transform (WDi) by the first operation of the second quantity received (Pi) and, on the other hand, a quantity (WVi) which is, depending upon the state of the code signal, either the first quantity ($R_i$), as received, or the transform ($R_i.A_j$) by the second operation of this first quantity ($R_i$) and of the reference quantity ($A_j$),
    d5) deciding the authorization as a function of the accuracy of the quantity received.

11. A method according to Claim 10, characterized in that steps d1) to d4) are repeated at the will of the verifying station (VH), changing on each occasion the auxiliary random integer and/or the respective alias.

12. A method according to Claims 9 to 11, characterized in that step d1) is carried out for a series of random integers of a chosen number, step d2) relates to a code signal completed by an alias designation, in correspondence with each auxiliary random integer, steps d3) and d4) relate, as the case applies, to the alias designated for each auxiliary integer.

**Patentansprüche**

1. Informatik- oder Telematik-Ermächtigungsvorrichtung, in der eine Anfrageeinrichtung (DH) über wenigstens eine Kennzeichnungsangabe verfügt, und über wenigstens eine Ermächtigungsangabe, im Prinzip geheim, die sie rechtfertigen muß bei einer Prüfeinrichtung (VH), zur Überprüfung der Ermächtigung nach ausgewählten Kriterien, dadurch gekennzeichnet, daß die Anfrageeinrichtung (DH) in einem geschützten Schaltkreis (CDH) umfaßt:

- Speichermittel (10) der genannten Ermächtigungsangabe in Form einer Ermächtigungsganzzahl, genannt "Alias" ($a_j$),
- Auslosungsmittel (13), geeignet, Hilfszufallsganzzahlen ($r_i$) zu definieren,
- erste Rechenmittel (11), geeignet, eine erste, nicht umkehrbare Rechenoperation durchzuführen, mit einem einzigen Ganzzahloperanden,
- zweite Rechenmittel (12), geeignet, eine zweite Rechenoperation durchzuführen mit zwei Ganzzahloperanden, wobei die erste Operation konservierend ist bezüglich dieser zweiten Operation,

und, außerhalb dieses geschützten Schaltkreises, Interfacemittel (IDH), geeignet, selektiv die Kennzeichnungsangabe, eine erste Größe, darstellend das durch die erste Rechenoperation Transformierte ($R_i$) einer Hilfszufallsganzzahl ($r_i$), sowie eine zweite Größe ($P_i$), darstellend, in Abhängigkeit vom Zustand eines Index-Signals, ausgegeben von der Prüfeinrichtung, entweder das durch die zweite Rechenoperation Transformierte ($P_i = r_i \cdot a_j$) dieser selben Zufallsganzzahl ($r_i$) und der Alias ($a_j$), oder diese Zufallsganzzahl selbst ($Pi = R_i$) zu liefern, was ermöglicht, die Ermächtigungsangabe zu überprüfen ohne sie zu kennen, und den Zufallscharakter der Hilfsganzzahlen zu überprüfen.

2. Vorrichtung nach Anspruch 1, dadurch gekennzeichnet, daß die erste Rechenoperation eine Erhebung in eine Potenz modulo N ist, wobei N eine vorher festgelegte öffentliche Ganzzahl ist, die ein breites Spektrum von Resten besitzt als Divisor in einer Ganzzahldivision, insbesondere eine Ganzzahl oder ein Produkt aus zwei Primzahlen, und dadurch, daß die zweite Rechenoperation eine Multiplikation modulo N ist.

3. Vorrichtung nach Anspruch 2, dadurch gekennzeichnet, daß die erste Rechenoperation eine Erhebung in die dritte Potenz modulo N ist.

4. Vorrichtung nach einem der Ansprüche 1 und 2, dadurch gekennzeichnet, daß die Prüfeinrichtung (VH) umfaßt:

- einen Speicher (30), geeignet zu enthalten, in Übereinstimmung mit der Kennzeichnung jeder Anfrageeinrichtung, wenigstens eine Referenzgröße ($A_j$), das durch die erste Rechenoperation Transformierte der Alias ($a_j$) darstellend,
- Rechenmittel (31), geeignet, die erste und die zweite Rechenoperation durchzuführen,
- Interfacemittel (40), geeignet von einer Anfrageeinrichtung die Kennzeichnungsangabe und die erste Größe ($R_i$) zu empfangen, ihr ein Indexsignal (si) zu übertragen, imstande, wenigstens zwei unterschiedliche Zustände anzunehmen, sowie danach die zweite Größe ($P_i$) entgegenzunehmen,
- Befragungsmittel (32), geeignet für wenigstens zwei unterschiedliche Zustände, jene des Indexsignals steuernd, und reagierend auf den Empfang einer Kennzeichnungsangabe und einer ersten Größe und wahlweise einen dieser beiden Zustände annehmend, um als zweite Größe ($P_i$) entweder, in dem ersten Zustand, das durch die zweite Rechenoperation Transformierte ($P_i = r_i \cdot a_j$) der Zufallsganzzahl, zugeordnet der ersten Größe und der Alias abzufragen oder, in dem zweiten Zustand, diese Zufallsganzzahl selbst ($Pi = r_i$), und
- Logikmittel (35) der Ermächtigungsentscheidung in Abhängigkeit von der Übereinstimmung zwischen, einerseits, dem durch die erste Rechenoperation Transformierten (WDi) und der zweiten Größe ($P_i$), und andererseits, entweder, in dem ersten Zustand, dem durch die zweite Rechenoperation Transformierten ($WVi = R_i \cdot a_j$) der ersten Größe ($R_i$) und der Referenzgröße ($A_j$) oder, in dem zweiten Zustand, der ersten Größe ($WVi = R_i$).

5. Vorrichtung nach Anspruch 4, dadurch gekennzeichnet, daß die Anfrageeinheit (DH) im Geheimspeicher (10) eine vorher festgelegt Anzahl Alias ($a_j$), eine geordnete Folge beziehungsweise Reihe bildend, besitzt, dadurch, daß die Prüfeinrichtung (VH) im Speicher (30) wenigstens einen Teil ($A_j$) der entsprechenden geordneten Folge von Referenzgrößen enthält, und dadurch, daß die Befragungsmittel (32) eine Anzahl unterschiedlicher Zustände besitzen, die höchstens gleich der Anzahl der Alias ist, um 1 erhöht.

**6.** Vorrichtung nach einem der Ansprüche 4 und 5, dadurch gekennzeichnet, daß die Prüfeinrichtung (VH) ebenfalls Mittel (37, 38, 35) umfaßt, geeignet, den Zufallscharakter der Hilfszufallsganzzahlen zu überprüfen.

**7.** Vorrichtung nach einem der Ansprüche 1 bis 6, dadurch gekennzeichnet, daß die Anfrageeinheit (DH), entfernt von der Prüfeinrichtung (VH), mit dieser über Modems (29, 49) verbunden ist, dadurch, daß sie zuerst eine Serie von ersten Größen aussendet, verschiedene Zufallsganzzahlen betreffend, und anschließend, in Übereinstimmung mit jeder ersten Größe, entweder die Zufallsganzzahl, oder das durch die zweite Rechenoperation Transformierte dieser selben Zufallsganzzahl und der Alias.

**8.** Vorrichtung nach einem der Ansprüche 1 bis 6, dadurch gekennzeichnet, daß die Anfrageeinrichtung (DH), örtlich, direkt mit der Prüfeinrichtung (VH) verbunden ist, und dadurch, daß sie antwortet auf eine Folge von Fragen, wovon jede sich zunächst auf eine erste Größe bezieht, eine bestimmte Zufallsganzzahl betreffend, und dann entweder auf diese Zufallsganzzahl, oder auf das durch die zweite Rechenoperation Transformierte der Zufallsganzzahl und einer bezeichneten Ermächtigungs-Ganzzahl.

**9.** Vorrichtung nach einem der Ansprüche 1 bis 8, dadurch gekennzeichnet, daß die Anfrageeinrichtung (DH) auch imstande ist, das Transformierte, durch die erste Rechenoperation, von wenigstens einer ihrer Alias zu übertragen.

**10.** Informatik- oder Telematik-Ermächtigungsverfahren zwischen wenigstens einer Anfrageeinrichtung und wenigstens einer Prüfeinrichtung, gekennzeichnet durch die folgenden Schritte:
   a) vorhergehendes Einspeichern (10) von wenigstens einer Ermächtigungs-Ganzzahl oder "Alias" ($a_j$) in der Anfrageeinrichtung,
   b) Auslosen der Zufallshilfsganzzahlen ($r_i$) durch die Anfrageeinrichtung.
   c) Einspeichern in der Anfrageeinrichtung (30), zu einem beliebigen Zeitpunkt, einer Referenzgröße, darstellend das durch eine erste Rechenoperation Transformierte ($A_j$) einer oder mehrerer Alias, nicht umkehrbar, mit einem einzigen Ganzzahloperanden.
   d) bei einer Ermächtigungsanfrage, von der vorausgesetzt wird, daß sie von der Anfrageeinrichtung kommt:
      d1) Erhalten, an der Prüfeinrichtung (VH), einer ersten Größe, darstellend das durch die erste Rechenoperation Trans-

formierte ($R_i$) von wenigstens einer bestimmten Zufallsganzzahl,
      d2) Senden, von der Prüfeinrichtung (VH), eines Indexsignals (si), einen Zustand von wenigstens zwei unterschiedlichen Zuständen einnehmend,
      d3) Erhalten, an der Prüfeinrichtung (VH), einer Größe (Pi), bei der vorausgesetzt wird, je nach Zustand des Indexsignals, daß sie entweder der Zufallshilfsganzzahl ($Pi = r_i$) entspricht, oder dem durch eine zweite Rechenoperation Transformierten ($Pi = r_i \cdot a_j$) dieser Zufallshilfsganzzahl und der Alias, mit zwei Ganzzahloperanden, wobei die erste Rechenoperation konservierend ist bezüglich der zweiten,
      d4) Ermitteln beziehungsweise Feststellen der Übereinstimmung zwischen, einerseits, des durch die erste Rechenoperation Transformierten (WDi) der zweiten erhaltenen Größe (Pi) und, andererseits, einer Größe (WVi), die, je nach Zustand des Indexsignals, entweder die erste Größe ($R_i$), wie erhalten, oder das durch die zweite Rechenoperation Transformierte ($R_i \cdot A_j$) dieser ersten Größe ($R_i$) und der Referenzgröße ($A_j$) ist,
      d5) Entscheiden über die Ermächtigung in Abhängigkeit von der Richtigkeit der erhaltenen Größe.

**11.** Verfahren nach Anspruch 10, dadurch gekennzeichnet, daß die Schritte d1) bis d4) von der Prüfeinrichtung (VH) nach Belieben wiederholt werden, indem jedesmal die Zufallshilfsganzzahl und/oder die betreffende Alias ausgetauscht wird.

**12.** Verfahren nach den Ansprüchen 9 bis 11, dadurch gekennzeichnet, daß der Schritt d1) durchgeführt wird für eine Serie Zufallsganzzahlen in gewählter Anzahl, daß der Schritt d2) sich auf ein Indexsignal bezieht, vervollständigt durch eine Aliasbezeichnung, in Übereinstimmung mit jeder Zufallshilfsganzzahl, daß die Schritte d3) und d4) sich, gegebenenfalls, auf die bezeichnete Alias beziehen für jede Zufallsganzzahl.

# FIG.1

CDH

10
MEMOIRE
'ALIAS' ai

13
GENERATEURS
ENTIERS
ALEATOIRES ri

15
LOG.
DE
COMM.

16

11
CALCUL $(x)_N^3$

12
CALCUL $(x.y)_N$

IDH

20
INTERFACE 'DEMANDEUR'

29
MDH
MODEM

CVH

30
MEMOIRE Ai DEMANDEURS

32
GENERATEUR
D'INTERROG.ᴺ

37
MEMOIRE
TAMPON
Ri;RiAi

38
MEMOIRE
TAMPON
pi(ouWDi)

35
31
CALCUL
$(X)_N^3$
$(X.Y)_N$

LOG.
DE
COMM.
ET DE
DECIS.

IVH

40
INTERFACE 'VERIFICATEUR'

50

49
MODEM
MVH

DH

VH

EP 0 294 248 B1

# FIG. 2